# EUROPÄISCHE PATENTANMELDUNG

(11) **EP 4 286 639 A1**
(43) Veröffentlichungstag der Anmeldung: **06.12.2023**
(21) Anmeldenummer: 23176344.2
(22) Anmeldetag: 31.05.2023
(51) Int. Cl.: E06B 3/66, E06B 3/663, E06B 3/677

(54) **VERFAHREN ZUM HERSTELLEN VON VAKUUMISOLIERGLAS**

(30) Priorität: 02.06.2022 DE 102022113990
(71) Anmelder: sedak GmbH & Co. KG, 86368 Gersthofen (DE)
(72) Erfinder: SCHLÖGL, Fritz, 86391 Stadtbergen (DE)
(74) Vertreter: Meissner Bolte Partnerschaft mbB

(57) **Zusammenfassung**

Die vorliegende Erfindung betrifft ein Verfahren zum Herstellen von Vakuumisolierglas, wobei das Verfahren Folgendes aufweist: Aufbringen eines Vakuumdichtstoffs (206) auf eine erste Oberfläche einer ersten Glasscheibe (202), wobei der Vakuumdichtstoff (206) eine Kunststofffolie mit einer vorzugsweise rauen Oberfläche aufweist; Aufsetzen einer zweiten Glasscheibe (204) auf den Vakuumdichtstoff (206), derart, dass zwischen den ersten und zweiten Glasscheiben und dem Vakuumdichtstoff (206) ein Hohlraum gebildet wird; Anbringen eines Vakuums an einer Außenseite des Vakuumdichtstoffs, so lange bis sich ein Vakuum im Hohlraum (208) einstellt, wobei die ersten und zweiten Glasscheiben zum Anbringen des Vakuums in einen Vakuumsack gegeben werden; und Erhitzen des Vakuumdichtstoffs (206), während sich die ersten und zweiten Glasscheiben im Vakuumsack befinden.

## Beschreibung

Die vorliegende Erfindung betrifft ein Verfahren zum Herstellen von Vakuumisolierglas, insbesondere für Gebäudehüllen und Fenster. Die vorliegende Erfindung betrifft weiter ein mit dem Verfahren hergestelltes Vakuumisolierglas.

Vakuumisolierglas ist eine eigenständige Alternative zu gasgefüllten Zweifach- und Dreifach-Isoliergläsern. Wie die herkömmlichen, gasgefüllten Isolierglaseinheiten, werden auch Vakuumisoliergläser zum Erhöhen der thermischen Isolation und der Schallisolation von Gebäuden verwendet. Sie sind daher ein wichtiger Faktor für den Komfort des Bewohners eines Gebäudes, insbesondere verglichen mit Glaseinheiten mit schwacher Isolation, die beispielsweise durch gewöhnliche einfache Verglasung geschaffen wird.

Herkömmliche Isoliergläser werden durch zwei oder mehr Glasscheiben gebildet, welche über randseitig angeordnete Abstandshalter in einem Abstand zueinander gehalten werden. Der Abstandshalter ist in gewöhnlicher Weise ein Metallprofil, welches an den Kanten der Scheiben angeklebt ist. Ein abgedichteter Hohlraum, welcher zwischen den Glasscheiben gebildet und von den randseitigen Abstandshaltern begrenzt ist, wird bei Isoliergläsern mit einem trockenen Gas, wie trockener Luft oder auch Edelgasen gefüllt.

Vakuumisoliergläser haben einen sehr ähnlichen Aufbau. Auch hier wird ein Hohlraum zwischen zwei oder mehreren Glasscheiben definiert. Im Gegensatz zu den oben beschriebenen Isoliergläsern, wird der Hohlraum bei Vakuumisoliergläsern jedoch nicht mit Luft oder Edelgasen gefüllt. Vielmehr befindet sich zwischen den Glasscheiben ein luftleerer Raum, also ein Vakuum, durch welches der Wärmeübergang und die Konvektion im Vakuumisolierglas unterbunden wird. Das Vakuumisolierglas hat dementsprechend einen sehr niedrigen Energiedurchlass bei einem sehr dünnen Aufbau. Bereits dünne Vakuumhohlräume können einen ungewollten Wärmeübergang effektiv unterbinden.

Vakuumgläser werden derzeit von unterschiedlichen Herstellern in kleineren bis mittleren Stückzahlen angeboten. Dazu werden zwei Glasscheiben oder Flächenelemente mit einem lötfähigen Streifen als randseitigem Rahmen bedruckt und eingebrannt. Danach werden kleine metallische Abstandshalter platziert, welche als punktuelle Abstützungen im Hohlraum zwischen den beiden Glasscheiben dienen. Die beiden so vorbereiteten Glasscheiben werden nun entlang der lötfähigen Streifen miteinander verlötet. Der Lötprozess findet in einem über 400°C aufgeheizten Ofen statt, in dem das gesamte Glas nach der Vorbehandlung der Lötflächen verbunden wird. Eine der beiden Glasscheiben hat eine Bohrung, die mit einem Ventil versehen ist. An diesem Ventil wird nach Verlöten der beiden Glasscheiben ein Vakuum gezogen und das Ventil mit Lötzinn verschlossen.

Der oben beschriebene Herstellprozess für Vakuumisoliergläser ist sehr aufwendig, wodurch Vakuumisoliergläser noch sehr teuer sind. Auch lässt sich dieser nur für Vakuumisoliergläser mit einfachen Glasscheiben verwenden, denn Verbundgläser als Sicherheitsglas (VSG) können die bei dem Lötprozess verwendeten Temperaturen von über 400°C nicht überstehen. Dies ist insbesondere deshalb der Fall, da die Verbundfolie, welche bei Sicherheitsgläsern zwischen den Glasscheiben angeordnet wird, derart hohen Temperaturen nicht standhält. Eine Laminierung nach dem Herstellen des Vakuums würde wiederum zum Glasbruch im Vakuumisolierglases führen, da der übliche Druck von etwa 12bar das Vakuumisolierglas zu stark belasten würde. Schließlich sind die herstellbaren Größen der Vakuumisoliergläser nach dem aus dem Stand der Technik bekannten Verfahren sehr limitiert und liegen derzeit maximal bei 2,4 bis 3 m.

Auf Grundlage der oben genannten Problemstellung, ist es eine Aufgabe der vorliegenden Erfindung ein Verfahren zum Herstellen von Vakuumisolierglas anzugeben, welches einen geringeren Fertigungsaufwand bedeutet und gleichzeitig keine Einschränkungen bezüglich der herstellbaren Größen bedeutet. Auch soll es durch das neue Verfahren möglich sein, Vakuumisoliergläser als Sicherheitsglas herzustellen.

Die oben genannte Aufgabe wird erfindungsgemäß durch den Gegenstand des unabhängigen Patentanspruchs 1 gelöst. Vorteilhafte Weiterbildungen der vorliegenden Erfindung sind in den abhängigen Patentansprüchen angegeben.

Demgemäß betrifft die Erfindung ein Verfahren zum Herstellen von Vakuumisolierglas, wobei das Verfahren Folgendes aufweist:
- Aufbringen eines Vakuumdichtstoffes auf eine erste Oberfläche einer ersten Glasscheibe, wobei der Vakuumdichtstoff eine Kunststofffolie mit einer vorzugsweise rauen Oberfläche aufweist;
- Aufsetzen einer zweiten Glasscheibe auf den Vakuumdichtstoff derart, dass zwischen den ersten und zweiten Glasscheiben und dem Vakuumdichtstoff ein Hohlraum gebildet wird;
- Anbringen eines Vakuums an einer Außenseite des Vakuumdichtstoffs, solange bis sich ein Vakuum im Hohlraum einstellt, wobei die ersten und zweiten Glasscheiben zum Anbringen des Vakuums in einen Vakuumsack gegeben werden;
- Erhitzen des Vakuumdichtstoffes, während sich die ersten und zweiten Glasscheiben im Vakuumsack befinden.

Nach dem neuartigen Verfahren wird der Randverbund der Glasscheiben des Vakuumisolierglases nicht verlötet, sondern durch eine Kunststofffolie, beispielsweise eine Verbundfolie, wie sie auch im Laminationsprozess von Sicherheitsglas verwendet wird, miteinander verbunden. Diese Kunststofffolie wird randseitig zwischen den beiden Glasscheiben angeordnet, so dass zwischen der Kunststofffolie und den Glasscheiben ein Hohlraum gebildet wird. Die Kunststofffolie ist dementsprechend vorzugsweise im gesamten Randbereich der Glasscheiben angeordnet.

Im Ursprungszustand, das heißt wenn die Kunststofffolie noch nicht erhitzt wurde, ist diese noch luftdurchlässig. Mit anderen Worten, ein Luftaustausch zwischen dem Hohlraum, welcher durch die Kunststofffolie und die Glasscheiben begrenzt wird, und der Außenseite ist vor Erhitzen der Kunststofffolie noch immer möglich. Die Kunststofffolie weist also beim Aufbringen auf die Glasscheiben, vor dem Erhitzen, noch keinen hermetischen Verbund mit den Glasscheiben auf. Dies wird insbesondere durch eine Kunststofffolie mit einer gewissen Rauheit begünstigt, wodurch Lücken zwischen den Glasscheiben und der Kunststofffolie aufgrund der Rauheit bestehen. Es kann daher von Vorteil sein, Kunststofffolien mit einer Mittenrauheit von 1µm bis 10µm zu verwenden. Durch die nicht hermetisch abschließende Kunststofffolie kann Luft oder andere Gase aus dem Hohlraum zwischen den Glasscheiben entfernt (gezogen) werden, ohne eine Öffnung in den Glasscheiben vorsehen zu müssen. Vielmehr wird die Luft dann über die Kunststofffolie in den Außenbereich gezogen. Hierzu kann beispielsweise eine Vakuumpumpe an der Außenseite der Glasscheiben verwendet werden. Die Glasscheiben werden hierzu insbesondere in einen Vakuumsack gegeben.

Sobald ein Vakuum zwischen den Glasscheiben erzielt wurde, wird der als Kunststofffolie ausgebildete Vakuumdichtstoff erhitzt, insbesondere noch während sich die Glasscheiben in einem Vakuumsack befinden. Der Vakuumdichtstoff wird so lange erhitzt, bis sich dieser im Randbereich der Glasscheiben lückenlos mit diesen verbunden hat und eine hermetische Dichtung für den Hohlraum ausbildet. Während des Erhitzens des Vakuumdichtstoffs ist die Vakuumpumpe vorzugsweise weiter im Betrieb, um ein Eindringen von Luft oder Gasen in den Hohlraum zu verhindern, solange die hermetische Dichtung noch nicht hergestellt ist.

Die Vorteile des vorliegenden Verfahrens liegen auf der Hand: so wird durch die Verwendung einer Kunststofffolie als Vakuumdichtstoff ein Absaugen von Luft aus dem Hohlraum über den Vakuumdichtstoff selbst erreicht, so dass keine weiteren Öffnungen an den Glasscheiben notwendig sind. Auch können die zum Verschmelzen des als Kunststofffolie ausgebildeten Vakuumdichtstoffs verwendeten Temperaturen weit unter den bekannten Löttemperaturen liegen, so dass auch Vakuumisoliergläser aus Verbundsicherheitsglas herstellbar sind.

Durch die Verwendung eines Vakuumsacks, ist es möglich gleichzeitig ein Vakuum zwischen den Glasscheiben zu ziehen und von außen (d.h. Außerhalb des Vakuumsacks) Druck auf die Glasscheiben zu geben. Mit anderen Worten kann der Vakuumsack außenseitig mit Druck beaufschlagt werden, während innseitig ein Vakuum herrscht. Die Druckluft kann gleichzeitig dazu verwendet werden, den Vakuumdichtstoff zu erhitzen. Eine derartige Bereitstellung von Vakuum, Hitze und Druck ist nur durch die Verwendung eines Vakuumsacks möglich. Der Einsatz einer Vakuumheizkammer allein, kann zumindest den Überdrück nicht gewährleisten, sodass der Vakuumdichtstoff unter Umständen nur eine unzureichende Dichtigkeit aufweist.

Der Vakuumsack umgibt die beiden Glasscheiben insbesondere vollumfassend. Der Vakuumsack wird dann mit einer Vakuumpumpe verbunden, so dass im Innenraum des Vakuumsacks ein Vakuum entsteht, welches dementsprechend auch die im Hohlraum zwischen den Glasscheiben befindliche Luft evakuiert. Die Verwendung eines Vakuumsacks ermöglicht es den Vakuumdichtstoff unter Druck zu verschmelzen, ohne neue Luft in den Hohlraum einzubringen.

Schließlich kann durch das neuartige Verfahren ein volltransparentes Vakuumisolierglas hergestellt werden. Dies ist insbesondere deshalb der Fall, da die Kunststofffolie, beispielsweise eine Laminierfolie, zumindest nach dem Erhitzen transparent ist und somit im Randverbund des Vakuumisolierglases nur noch durch den Experten erkennbar ist. Auch können durch das neue Verfahren wesentlich größere Vakuumisoliergläser, beispielsweise bis zu 20m x 3,6m, hergestellt werden.

Nach einer weiteren Ausführungsform weist der Vakuumdichtstoff eine Polyvinyl-Butyral Folie auf. Es wurde festgestellt, dass die Verwendung einer Kunststofffolie aus Polyvinyl-Butyral besonders vorteilhaft ist, da diese eine natürliche Rauheit besitzt, welche das Ziehen des Vakuums über den Vakuumdichtstoff begünstigt. Auch lässt sich Polyvinyl-Butyral vergleichsweise einfach verarbeiten, so dass die verwendeten Drücke und Temperaturen nicht zu hoch gewählt werden müssen.

Nach einer weiteren Ausführungsform weist das Verfahren einen Schritt zum Aufbringen einer Barriere vor dem Aufsetzen der zweiten Glasscheibe auf, wobei die Barriere zwischen dem Hohlraum und dem Vakuumdichtstoff angeordnet wird. Die Barriere dient dazu zu verhindern, dass der als Kunststofffolie ausgebildete Vakuumdichtstoff beim Erhitzen über den Randbereich der Glasscheiben hinaus in den Hohlraum eindringt. Vielmehr wird durch die Barriere sichergestellt, dass der Vakuumdichtstoff in einem genau definierten Randbereich der Glasscheiben verbleibt. Auch hilft die Barriere das Vakuum im Hohlraum beizubehalten, das heißt den Luftaustausch mit der Außenseite zu verhindern.

Die Barriere kann nach einer weiteren Ausführungsform Silikon, insbesondere transparentes Silikon, aufweisen. Demnach werden also auch für die Barriere Kunststoffe verwendet, welche ähnliche Temperatureigenschaften wie die Kunststofffolie des Vakuumdichtstoffs aufweisen. Darüber hinaus wird durch die Verwendung von transparentem Silikon erreicht, dass das neuartige Vakuumisolierglas volltransparent ist. Die aus transparentem Silikon gefertigte Barriere ist dabei nach dem Herstellungsprozess nur noch durch das geschulte Auge erkennbar.

Nach einer weiteren Ausführungsform weist die Barriere mindestens zwei auf Gehrung geschnittene Abschnitte auf, welche auf der ersten Oberfläche der ersten Glasscheibe derart nebeneinander angeordnet sind, dass eine Gehrungsfuge im Stoßbereich entsteht. Bei rechteckigen Glasscheiben kann die Barriere beispielsweise vier Abschnitte aufweisen, welche jeweils an ihren beiden gegenüberliegenden Enden auf Gehrung geschnitten sind. Diese werden dann zu einem Rahmen zusammengefügt, wie dies beispielsweise auch bei den Profilteilen von Fensterrahmen üblicherweise der Fall ist. Bei einem derartigen Beispiel weist die Barriere an jeder Ecke der rechteckigen Glasscheiben eine Gehrungsfuge auf. Die Gehrungsfuge hat den Vorteil, dass diese als Kanal für das Absaugen der Luft im Hohlraum während des Herstellungsprozesses dient. In alternativen Ausführungsbeispielen weist die Barriere zwei Abschnitte auf, welche derart nebeneinander angeordnet sind, dass eine Stoßkante entsteht. Diese muss nicht als Gehrungsfuge ausgebildet sein um als Vakuumkanal zu dienen, wie dies oben mit Bezug auf die Gehrungsfugen beschrieben wurde. Vielmehr kann es sich auch um senkrechte Stoßfugen zwischen benachbarten Abschnitten der Barriere handeln. Insbesondere bei Verwendung von Acrylstreifen, können diese an ihren (senkrechten) Stoßkanten 0,5mm bis 2mm, vorzugsweise 1mm, voneinander beabstandet sein, so dass ein Luftkanal zum Absaugen der Luft im Hohlraum entsteht. Durch den Druck und die Hitze im Herstellungsprozess, werden die Abstände zwischen aneinandergrenzenden Acrylstreifen geschlossen, wodurch eine im wesentlichen einteilige Barriere aus Acryl entsteht.

Nach einer weiteren Ausführungsform werden die ersten und zweiten Glasscheiben zum Erhitzen des Vakuumdichtstoffes in einen Autoklaven gegeben. Im Autoklaven können gleichzeitig ein Überdruck sowie die benötigten Temperaturen zum Verschmelzen des Vakuumdichtstoffs erreicht werden. Insbesondere können die beiden Glasscheiben dabei in einem Vakuumsack in den Autoklaven eingebracht werden, während eine Vakuumpumpe außerhalb des Autoklaven angeordnet und mit dem Vakuumsack verbunden ist.

Nach einer weiteren Ausführungsform wird während des Erhitzens der ersten und zweiten Glasscheibe ein Druck von 0,5 bar bis 3 bar, vorzugsweise von 1 bar bis 2 bar, angelegt. Derartige Druckverhältnisse führen zu einer besonders verlässlichen Abdichtung des Hohlraums durch den Vakuumdichtstoff. Ferner ist es gemäß einer weiteren Ausführungsform von Vorteil, den Vakuumdichtstoff auf 100°C bis 150°C, vorzugsweise zwischen 125°C und 135°C, zu erhitzen.

Nach einer weiteren Ausführungsform der vorliegenden Erfindung werden vor dem Aufsetzen der zweiten Glasscheibe Abstandshalter derart auf der ersten Oberfläche der ersten Glasscheibe verteilt, dass die Abstandshalter nach dem Aufsetzen der zweiten Glasscheibe im Hohlraum angeordnet sind. Die Abstandshalter dienen dazu, den Abstand zwischen den beiden Glasscheiben und damit das Volumen des Hohlraums zu bestimmen. Die Abstandshalter verhindern außerdem ein Verbiegen der Glasscheiben durch den während des Herstellungsprozesses angewandten Druck.

Die Abstandshalter können beispielsweise aus transparentem Kunststoff gefertigt sein, um ein volltransparentes Vakuumisolierglas zu erhalten. In einer alternativen Ausführungsform sind die Abstandshalter nicht transparent (z.B. grau oder schwarz) ausgebildet, um das Vakuumisolierglas als Vogelschutzglas auszubilden. Die nicht transparenten Abstandshalter können dann beispielsweise in derart regelmäßig oder unregelmäßig beabstandet sein, dass sich ein von außen ersichtliches Muster ergibt.

Gemäß einer weiteren Ausführungsform weisen die Abstandshalter einen Durchmesser von 3 mm bis 12 mm, vorzugsweise 7 bis 10mm auf. Die Abstandshalter können eine Höhe von 0,5 mm bis 3 mm, vorzugsweise von 1 mm bis 2 mm, aufweisen.

Nach einer weiteren Ausführungsform weist das Verfahren einen Schritt zum Anbringen einer Randabdeckung an Kanten der ersten und zweiten Glasscheibe, vor dem Erhitzen des Vakuumdichtstoffs, auf. Mit anderen Worten können die Glasscheiben mit einer Randabdeckung umwickelt werden. Bei dieser Randabdeckung kann es sich beispielsweise um eine Metallfolie handeln, welche den Spalt zwischen den beiden Glasscheiben abdeckt, so dass der Vakuumdichtstoff beim Erhitzen nicht aus dem Spalt zwischen den Glasscheiben herauslaufen kann. Nach einer vorteilhaften Ausführungsform ist der Vakuumdichtstoff dementsprechend zwischen der Randabdeckung und einer innenseitigen Silikon-Barriere angebracht, so dass durch diese beiden Teile eine genau definierte Fläche (Raum) für den Vakuumdichtstoff definiert werden kann.

Nach einer weiteren Ausführungsform können die erste und/oder die zweite Glasscheibe mit weiteren Beschichtungen, wie beispielsweise Wärmeschutzbeschichtungen oder Sonnenschutzbeschichtungen, auf der ersten und/oder zweiten Oberfläche versehen sein.

Nach einem weiteren Aspekt betrifft die vorliegende Erfindung ein Vakuumisolierglas, welches Folgendes aufweist:
- eine erste und eine zweite Glasscheibe;
- ein Vakuumdichtstoff, welcher zwischen der ersten und zweiten Glasscheibe, insbesondere randseitig, angeordnet ist, sodass zwischen den ersten und zweiten Glasscheiben und dem Vakuumdichtstoff ein Hohlraum gebildet wird.

Nach einer weiteren Ausführungsform weist der Vakuumdichtsoff eine Polyvinyl-Butyral Folie auf.

Nach einer weiteren Ausführungsform weist das Vakuumisolierglas eine Barriere, insbesondere eine Barriere aus Silikon, auf, welche zwischen dem Hohlraum und dem Vakuumdichtstoff angeordnet ist.

Nach einer weiteren Ausführungsform weist das Vakuumisolierglas Abstandshalter aus Kunststoff, vorzugsweise aus transparentem Kunststoff, auf, welche im Hohlraum verteilt angeordnet sind.

Nach einer weiteren Ausführungsform weisen die Abstandshalter vorzugsweise einen Durchmesser von 3 mm bis 12 mm, vorzugsweise 7 bis 10mm, auf. Die Abstandshalter können eine Höhe von 0,5 mm bis 3 mm, vorzugsweise von 1 mm bis 2 mm, aufweisen.

Nach einer nicht beanspruchten Variante betrifft die Offenbarung ein Verfahren zum Herstellen von Vakuumisolierelementen, wobei das Verfahren Folgendes aufweist:
- Aufbringen eines Vakuumdichtstoffes auf eine erste Oberfläche eines ersten Flächenelements, wobei der Vakuumdichtstoff eine Kunststofffolie mit einer vorzugsweise rauen Oberfläche aufweist;
- Aufsetzen eines zweiten Flächenelements auf den Vakuumdichtstoff derart, dass zwischen den ersten und zweiten Flächenelementen und dem Vakuumdichtstoff ein Hohlraum gebildet wird;
- Anbringen eines Vakuums an einer Außenseite des Vakuumdichtstoffs, solange bis sich ein Vakuum im Hohlraum einstellt;
- Erhitzen des Vakuumdichtstoffes.

Im Folgenden werden Ausführungsbeispiele des erfindungsgemäßen Verfahrens und des erfindungsgemäßen Vakuumisolierglases anhand der beigefügten Zeichnungen näher erläutert. Dabei zeigen:
- FIG. 1: ein schematisches Flussdiagramm einer Ausführungsform des Verfahrens gemäß der vorliegenden Erfindung;
- FIG. 2: eine schematische Draufsicht auf ein Vakuumisolierglas gemäß einer Ausführungsform der vorliegenden Erfindung; und
- FIG. 3: ein Querschnitt durch das Vakuumisolierglas gemäß FIG. 2 entlang der Achse A-A.

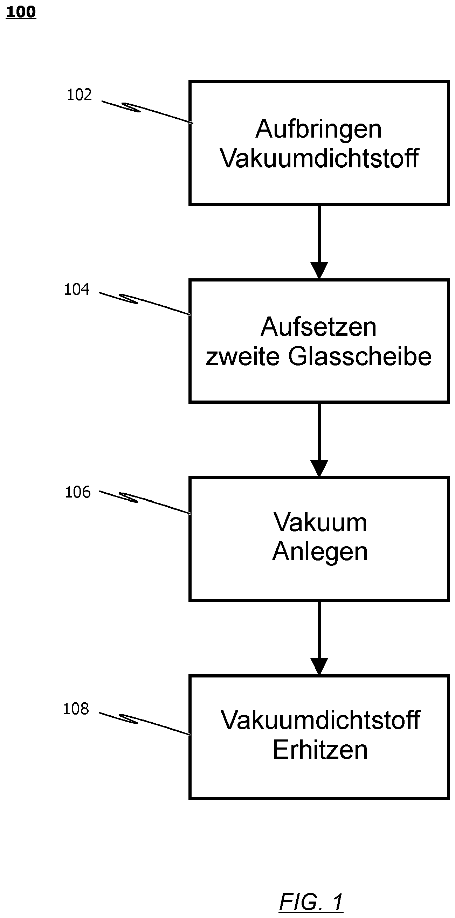

Der FIG. 1 ist ein schematisches Flussdiagramm eines Verfahrens zur Herstellung von Vakuumisolierglas gemäß einer Ausführungsform der vorliegenden Erfindung zu entnehmen. Das Verfahren 100 weist einen ersten Schritt 102 zum Aufbringen von Vakuumdichtstoff auf eine erste Glasscheibe auf.

Der Vakuumdichtstoff ist eine Kunststofffolie, welche vorzugsweise eine raue Oberfläche aufweist. In einer beispielhaften Ausführungsform handelt es sich bei der Kunststofffolie um eine Polyvinyl-Butyral Folie.

Der als Kunststofffolie ausgebildete Vakuumdichtstoff kann in Bahnen bzw. Streifen randseitig auf einer ersten Oberfläche der ersten Glasscheibe abgelegt bzw. angebracht werden. Die Streifen aus Kunststofffolie können eine Breite von 5 mm bis 15mm aufweisen. Die Streifen werden derart an der Randseite der ersten Glasscheibe abgelegt, dass diese möglichst gerade Stoßkanten aufweisen, wo sich zwei nebeneinanderliegende Streifen treffen. Bei einer rechteckigen Glasscheibe können beispielsweise vier Kunststoffstreifen (z.B. aus PVB) auf der Glasscheibe angebracht werden. Dabei wird je ein Streifen neben den Seitenkanten der ersten Glasscheibe abgelegt und zumindest provisorisch mit der Glasscheibe verbunden.

Vor oder nach dem Aufbringen des Vakuumdichtstoffs kann zusätzlich eine Barriere auf der ersten Oberfläche der ersten Glasscheibe angebracht werden. Diese Barriere ist beispielsweise aus einem Silikon, vorzugsweise aus einem transparenten Silikon, oder Acrylstreifen gebildet. Die Barriere wird auf einer Innenseite des Vakuumdichtstoffs angebracht. Mit anderen Worten, die Barriere befindet sich auf der der Außenkante der Glasscheibe gegenüberliegenden Seite des Vakuumdichtstoffs. Wie dies später näher erläutert werden wird, kann die Barriere dementsprechend dazu genutzt werden ein Einfließen des Vakuumdichtstoffs in einen Vakuum-Hohlraum während des Erhitzens zu verhindern.

Optional können Abstandshalter ebenfalls auf die erste Oberfläche der ersten Glasscheibe aufgebracht werden. Diese können vor oder nach dem Aufbringen des Vakuumdichtstoffs bzw. vor oder nach dem Aufbringen der Barriere auf der ersten Oberfläche der ersten Glasscheibe angeordnet werden. Die Abstandshalter werden insbesondere innerhalb des Vakuumdichtstoffs und, falls eine Barriere verwendet wird, auch innerhalb der Barriere angeordnet und dienen dazu, die Höhe des Vakuum-Hohlraums zu definieren und die beiden Glasscheiben zu beabstanden.

FIG. 1 zeigt ferner einen zweiten Schritt 104, in welchem eine zweite Glasscheibe mit ihrer ersten Oberfläche auf den Vakuumdichtstoff aufgesetzt wird. Hierdurch wird zwischen den ersten Oberflächen der ersten und zweiten Glasscheibe ein Hohlraum gebildet, welcher durch den Vakuumdichtstoff umrandet/begrenzt ist. Mit anderen Worten, die beiden Glasscheiben spannen zusammen mit dem Vakuumdichtstoff einen Hohlraum auf. Sofern im ersten Schritt 102 Abstandshalter bzw. eine Barriere auf die erste Oberfläche der ersten Glasscheibe aufgebracht wurden, werden auch diese zwischen den beiden ersten Oberflächen der Glasscheiben aufgenommen, wodurch sich der Hohlraum insbesondere innerhalb der Barriere befindet. Die Barriere trennt also den Hohlraum vom Vakuumdichtstoff.

Die beiden Glasscheiben weisen je eine zweite Oberfläche auf, welche der ersten Oberfläche gegenüberliegt. Nach einer weiteren Ausführungsform können weitere Glasscheiben bzw. andere Flächenelemente oder Schichten auf der Rückseite, also der zweiten Oberfläche der ersten und/oder zweiten Glasscheibe, angebracht werden. Beispielsweise kann die erste und/oder die zweite Glasscheibe auf ihrer zweiten Oberfläche über eine Verbundfolie mit einer weiteren Glasscheibe verbunden werden. Die Verbundfolie kann beispielsweise aus PVB bestehen. Gemäß diesem Ausführungsbeispiel des Verfahrens kann nicht nur ein Vakuumhohlraum zwischen den ersten und zweiten Glasscheiben sehr einfach erreicht werden. Vielmehr können die erste und/oder die zweite Glasscheibe auch gleichzeitig als Verbundsicherheitsglas (VSG) ausgebildet werden.

In einem dritten Schritt 106 wird außenseitig an dem Vorverbund aus der ersten und zweiten Glasscheibe (und ggf. weiteren Flächenelementen bzw. Glasscheiben) ein Vakuum angelegt werden. Gemäß einem Ausführungsbeispiel kann der Vorverbund aus den Glasscheiben und Flächenelementen in einen Vakuumsack gebracht werden, welcher mit einer Vakuumpumpe verbunden ist. Die Vakuumpumpe kann Luft und andere Gase aus dem Innenraum des Vakuumsacks und damit aus dem Hohlraum zwischen der ersten Glasscheibe und der zweiten Glasscheibe ziehen. Dabei wird sich der Vakuumsack an die Außenoberflächen der ersten und zweiten Glasscheiben anschmiegen, wobei Luft oder Gase, welche durch das Verbinden der beiden Glasscheiben im Hohlraum vorhanden ist, aus letzterem entfernt wird.

Die Luft kann über den als Kunststofffolie ausgebildeten Vakuumdichtstoff aus dem Hohlraum entfliehen. Dies ist nur so lange der Fall, bis es zum Erwärmen des Vakuumdichtstoffs kommt, welcher daraufhin den Hohlraum hermetisch abdichtet. Dementsprechend wird das Vakuum für eine Mindestzeit von 30 Minuten bis 60 Minuten an der Außenseite der Glasscheiben angelegt, so dass der Hohlraum zum luftleeren Raum wird, bevor der Vakuumdichtstoff im Schritt 108 erhitzt wird.

Das Erhitzen des Vakuumdichtstoffs im Schritt 108 erfolgt beispielsweise in einem Autoklaven. Dabei kann insbesondere der Vakuumsack zusammen mit den Glasscheiben in den Autoklaven eingebracht werden, wobei die Vakuumpumpe vorzugsweise außerhalb des Autoklaven angeordnet und mit dem Vakuumsack verbunden ist. Nachdem im Hohlraum zwischen den Glasscheiben ein ausreichend luftleerer Raum erzielt wurde, wird der Glas-Vorverbund mit dem Vakuumdichtstoff erhitzt. Insbesondere kann dieser auf eine Temperatur von 100°C bis 150°C, vorzugsweise zwischen 125°C und 135°C erhitzt werden. Hierdurch wird der als Kunststofffolie ausgebildete Vakuumdichtstoff aktiviert und verbindet sich dichtend mit den ersten Oberflächen der beiden Glasscheiben.

Nach einer besonders vorteilhaften Ausführungsform wird gleichzeitig mit dem Erhitzen des Vakuumdichtstoffs auch ein Überdruck im Autoklaven erzeugt, welcher die beiden Glasscheiben aufeinander zu und damit in Richtung des Vakuumdichtstoffs drückt. Der im Autoklaven erzeugte Überdruck kann nicht dazu führen, dass der Hohlraum wieder mit Luft befüllt wird, da die Glasscheiben auch weiterhin im Vakuumsack mit der Vakuumpumpe verbunden sind. Der Überdruck wirkt dementsprechend ausschließlich auf die Außenseite des Vakuumsacks. Der hier angelegte Druck kann von 0,3 bar bis 3 bar, vorzugsweise 1bar bis 2 bar, gewählt werden. In manchen Ausführungsformen wird jedoch kein Überdruck zur Herstellung des Vakuumisolierglases verwendet.

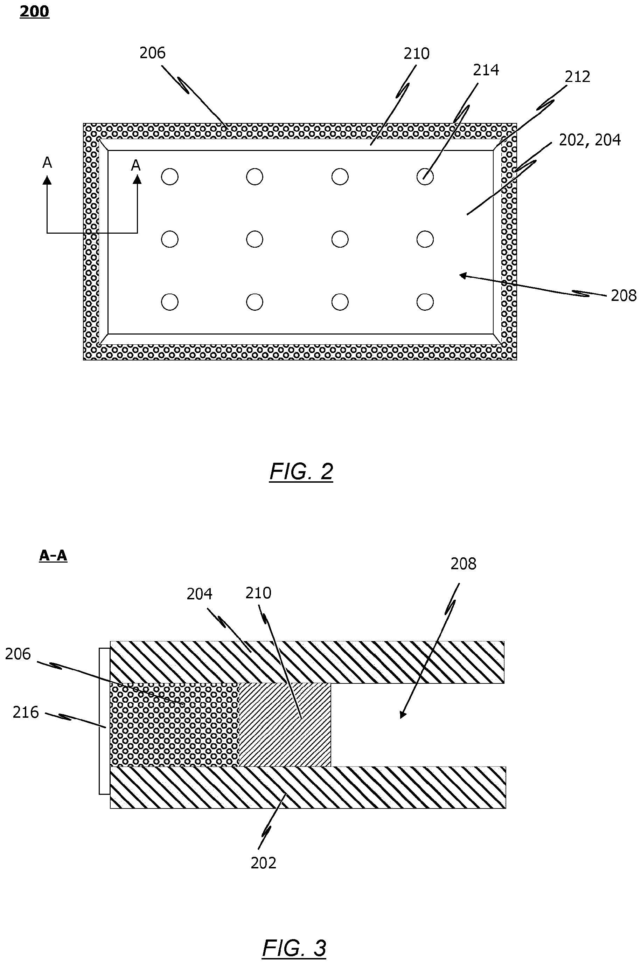

Die FIG. 2 zeigt eine schematische Draufsicht auf ein Vakuumisolierglas gemäß einer Ausführungsform der vorliegenden Erfindung. Das Vakuumisolierglas 200 gemäß FIG. 2 weist eine erste Glasscheibe 202 sowie eine zweite Glasscheibe 204 auf, welche parallel aufeinander angeordnet sind. Die beiden Glasscheiben 202, 204 sind über einen Vakuumdichtstoff 206 miteinander verbunden. Der Vakuumdichtstoff 206 ist randseitig an den Innenkanten der Glasscheiben 202, 204 angebracht. Wie zu erkennen ist, bildet der Vakuumdichtstoff 206 einen umfassenden Rahmen aus, welcher randseitig einen Hohlraum 208 zwischen den beiden Glasscheiben 202, 204 begrenzt. Nach Durchlaufen eines Verfahrens gemäß FIG. 1 ist der Vakuumdichtstoff 206 hermetisch dichtend mit den beiden Glasscheiben 202, 204 verbunden, so dass keine Luft oder andere Gase von der Außenseite in den Hohlraum 208 gelangen können.

Eine Barriere 210 ist innenseitig neben dem Vakuumdichtstoff 206 angeordnet. Die in FIG. 2 dargestellte Vakuumbarriere 210 ist beispielhaft aus vier Silikonstreifen gebildet, welche an ihren gegenüberliegenden Enden jeweils auf Gehrung geschnitten sind. Dementsprechend ist an jeder Stoßkante zwischen zwei nebeneinander angeordneten Silikonstreifen der Barriere 210 eine Gehrungsfuge 212 vorgesehen. Die vier Gehrungsfugen 212 dienen insbesondere dem Absaugen der Luft/des Gases aus dem Hohlraum 208 im Schritt 106.

Durch das Vorsehen der Barriere 210 wird auch verhindert, dass die fließfähige Kunststofffolie des Vakuumdichtstoffs 206 während des Erhitzens unkontrolliert in Richtung des Hohlraums 208 verläuft. Mit anderen Worten, es wird durch die Barriere 210 ein genauer, wiederholbarer Dichtrahmen aus dem Vakuumdichtstoff 206 erzielt.

Wie oben bereits angedeutet können zwischen den beiden Glasscheiben 202, 204 eine Vielzahl von Abstandshaltern 214 angeordnet sein. Die Abstandshalter 214 können insbesondere aus transparentem Kunststoff ausgebildet sein, so dass das Vakuumisolierglas 200 volltransparent ist. An dieser Stelle sei auch erwähnt, dass sowohl der aus PVB gebildete Vakuumdichtstoff sowie auch die Silikon-Barriere nach dem Erhitzen transparent sind und nur durch den Fachmann zwischen den Scheiben erkennbar sind.

Die Abstandshalter 214 können einen Durchmesser von 3 mm bis 12 mm, vorzugsweise 7 mm bis 10 mm aufweisen. Dieser Durchmesser ist signifikant größer, als es bei Abstandshaltern von herkömmlichen Vakuumisoliergläsern der Fall ist. Dementsprechend können die Abstandshalter in einem weiteren Abstand voneinander angeordnet werden, so dass die Anzahl an Abstandshaltern 214 reduziert werden kann, wodurch auch die Transparenz des Vakuumisolierglases verbessert wird.

Die Abstandshalter können eine Höhe von 0,5 mm bis 3 mm, vorzugsweise 1mm bis 2mm, aufweisen. Hierdurch wird auch die Dicke des Hohlraums, das heißt der Abstand zwischen den beiden Glasscheiben 202, 204, definiert. Die Höhe von 1mm bis 10 mm führt zu einem größeren Abstand der beiden Glasscheiben 202, 204 als dies bei bekannten Vakuumisoliergläsern der Fall ist, wodurch der Wärmedurchgangskoeffizient weiter reduziert wird.

Der FIG. 3 ist ein Querschnitt durch das Vakuumisolierglas 200 gemäß FIG. 2 entlang der Schnittachse A-A zu entnehmen. Dabei ist insbesondere eine zusätzliche Randabdeckung 216 gezeigt, welche an den Seitenkanten der ersten und zweiten Glasscheibe 202, 204 angeordnet ist. Die Randabdeckung 216 dient zum randseitigen Abschließen des Spalts zwischen den beiden Glasscheiben 202, 204. Somit wird durch die Randabdeckung 216 erreicht, dass der aus einer Kunststofffolie gebildete Vakuumdichtstoff 206 beim Erhitzen nicht aus dem Zwischenraum zwischen den beiden Glasscheiben 202, 204 herausfließen kann. Demnach verteilt sich der Vakuumdichtstoff im Zwischenraum zwischen der Randabdeckung 216 und der Barriere 210 und dichtet diesen hermetisch ab, so dass das im Hohlraum 208 gebildete Vakuum über eine lange Zeitspanne aufrechterhalten werden kann. Die Randabdeckung 216 kann beispielsweise aus einer Metallfolie, wie einer Aluminiumfolie, Edelstahlfolie oder Titanfolie, gebildet sein.

Die vorliegende Erfindung ist nicht auf die in den Figuren dargestellten Ausführungsformen beschränkt, sondern ergibt sich aus einer Zusammenschau sämtlicher hierin offenbarter Merkmale. Auch sei angemerkt, dass sich die Erfindung nicht nur auf Vakuumisolierglas, sondern auf jedes andere Vakuumisolierelement anwenden lässt, bei dem ein Hohlraum nicht zwischen Glasscheiben, sondern zwischen zwei anderen, transparenten oder opaken Flächenelementen angeordnet ist.

## Patentansprüche

1. Verfahren zum Herstellen von Vakuumisolierglas, wobei das Verfahren Folgendes aufweist:
- Aufbringen eines Vakuumdichtstoffs (206) auf eine erste Oberfläche einer ersten Glasscheibe (202), wobei der Vakuumdichtstoff (206) eine Kunststofffolie mit einer vorzugsweise rauen Oberfläche aufweist;
- Aufsetzen einer zweiten Glasscheibe (204) auf den Vakuumdichtstoff (206) derart, dass zwischen den ersten und zweiten Glasscheiben und dem Vakuumdichtstoff (206) ein Hohlraum (208) gebildet wird;
- Anbringen eines Vakuums an einer Außenseite des Vakuumdichtstoffs, solange bis sich ein Vakuum im Hohlraum (208) einstellt, wobei die ersten und zweiten Glasscheiben zum Anbringen des Vakuums in einen Vakuumsack gegeben werden;
- Erhitzen des Vakuumdichtstoffs (206), während sich die ersten und zweiten Glasscheiben im Vakuumsack befinden.

2. Verfahren nach Anspruch 1,
wobei der Vakuumdichtstoff (206) eine Polyvinyl-Butyral Folie aufweist.

3. Verfahren nach Anspruch 1 oder 2,
wobei das Verfahren einen Schritt zum Aufbringen einer Barriere (210) vor dem Aufsetzen der zweiten Glasscheibe (204) aufweist, wobei die Barriere (210) zwischen dem Hohlraum (208) und dem Vakuumdichtstoff (206) angeordnet wird.

4. Verfahren nach Anspruch 3,
wobei die Barriere (210) Silikon, insbesondere transparentes Silikon, oder einen Acrylstreifen aufweist.

5. Verfahren nach Anspruch 3 oder 4,
wobei die Barriere (210) mindestens zwei auf Gehrung geschnittene Abschnitte aufweist, welche auf der ersten Oberfläche der ersten Glasscheibe (202) derart nebeneinander angeordnet sind, dass eine Gehrungsfuge (212) entsteht.

6. Verfahren nach einem der Ansprüche 3 oder 4,
wobei die wobei die Barriere (210) mindestens zwei Streifen aufweist, welche an ihren Stoßkanten 0,5 mm bis 2mm, vorzugsweise etwa 1mm, voneinander beabstandet sind.

7. Verfahren nach einem der Ansprüche 1 bis 6,
wobei die ersten und zweiten Glasscheiben zum Erhitzen des Vakuumdichtstoffs (206) in einen Autoklaven gegeben werden.

8. Verfahren nach Anspruch 7,
wobei im Autoklaven, während des Erhitzens der ersten und zweiten Glasscheiben, ein Druck von 0,5 bar bis 3 bar, vorzugsweise von 1 bar bis 2 bar, angelegt wird.

9. Verfahren nach einem der Ansprüche 1 bis 8,
wobei der Vakuumdichtstoff (206) auf 100°C bis 150°C, vorzugsweise zwischen 125°C und 135°C, erhitzt wird.

10. Verfahren nach einem der Ansprüche 1 bis 9,
wobei vor dem Aufsetzen der zweiten Glasscheibe (204) Abstandshalter (214), insbesondere Abstandshalter aus Kunststoff, vorzugsweise aus transparentem Kunststoff, derart auf der ersten Oberfläche der ersten Glasscheibe (202) verteilt werden, dass die Abstandshalter (214) nach dem Aufsetzen der zweiten Glasscheibe (204) im Hohlraum (208) angeordnet sind, wobei die Abstandshalter vorzugsweise einen Durchmesser von 3 mm bis 12 mm, vorzugsweise 7 bis 10mm, aufweisen.

11. Verfahren nach einem der Ansprüche 1 bis 10,
wobei das Verfahren einen Schritt zum Anbringen einer Randabdeckung (216) an Kanten der ersten und zweiten Glasscheibe (204), vor dem Erhitzen des Vakuumdichtstoffs (206), aufweist.

12. Vakuumisolierglas, welches Folgendes aufweist:
- eine erste Glasscheibe (202) und eine zweite Glasscheibe (204);
- ein Vakuumdichtstoff (206), welcher zwischen der ersten und zweiten Glasscheibe, insbesondere randseitig, angeordnet ist, sodass zwischen den ersten und zweiten Glasscheiben und dem Vakuumdichtstoff (206) ein Hohlraum (208) gebildet wird,
wobei der Vakuumdichtstoff (206) eine Kunststofffolie aufweist.

13. Vakuumisolierglas nach Anspruch 12,
wobei der Vakuumdichtstoff (206) eine Polyvinyl-Butyral Folie aufweist.

14. Vakuumisolierglas nach Anspruch 12 oder 13,
wobei das Vakuumisolierglas eine Barriere (210), insbesondere eine Barriere (210) aus Silikon oder Acrylstreifen, aufweist, welche zwischen dem Hohlraum (208) und dem Vakuumdichtstoff (206) angeordnet ist.

15. Vakuumisolierglas nach einem der Ansprüche 12 bis 14,
wobei das Vakuumisolierglas Abstandshalter aus Kunststoff, vorzugsweise aus transparentem Kunststoff, aufweist, welche im Hohlraum (208) verteilt angeordnet sind, wobei die Abstandshalter vorzugsweise einen Durchmesser von 3 mm bis 12 mm, vorzugsweise 7 mm bis 10mm, aufweisen.
